# EUROPEAN PATENT SPECIFICATION

(11) **EP 4 373 680 B1**
(45) Date of publication and mention of the grant of the patent: **25.06.2025**
(21) Application number: 22747778.3
(22) Date of filing: 19.07.2022
(51) Int. Cl.: B60G 7/00, F16B 35/04, B62D 17/00, B60G 7/02, F16B 39/20, F16B 43/00

(54) **AN ADJUSTING DEVICE FOR ADJUSTING THE CAMBER ANGLE FOR A SUSPENSION OF A MOTOR VEHICLE**
EINSTELLVORRICHTUNG ZUR EINSTELLUNG DES STURZWINKELS FÜR EINE AUFHÄNGUNG EINES KRAFTFAHRZEUGS
DISPOSITIF D'AJUSTEMENT POUR AJUSTER L'ANGLE DE CARROSSAGE POUR UNE SUSPENSION D'UN VÉHICULE À MOTEUR

(30) Priority: 21.07.2021 IT 202100019331
(43) Date of publication of application: 29.05.2024
(73) Proprietor: A. AGRATI S.p.A., 20837 Veduggio con Colzano-Monza Brianza (IT)
(72) Inventor: CONFALONIERI, Antonio, 20837 Veduggio con Colzano MB (IT)
(74) Representative: Novagraaf Technologies
(86) International application number: PCT/IB2022/056628
(87) International publication number: WO 2023/002357

(56) References cited:
- AU-B2- 657 128
- US-A- 2 890 893
- US-A1- 2005 001 397
- US-A1- 2013 181 422
- US-B1- 6 176 501

## Description

### Technical field

The present invention is developed in the technical field of the suspensions for motor vehicles, in more detail in the field of the camber angle adjustment, in accordance with the preamble of claim 1.

### State of the art

The suspensions for motor vehicles are complex mechanical structures that connect the wheels to the chassis of a motor vehicle, or of a vehicle in general. The suspensions comprise one or more damping devices that reduce the transmission of vibrations from the wheels to the chassis. The chassis is then suspended thanks to the damping devices.

The damping devices are mounted on a set of arms and structures of the suspension, which can assume different configurations generally known to a person skilled in the art. The position of some of these arms and structures determines the camber angle of the wheels.

The camber angle indicates how far the wheel deviates from a vertical orientation. It is positive if the upper part of the wheel is tilted towards the outside of the vehicle, and it is negative if it is tilted towards the inside. This has consequences on the distribution of forces in the wheel and on the grip, especially when cornering.

In particular, the camber angle is determined by the reciprocal position between the axle of the wheels and one of the suspension arms, based on how these are connected to the hub assembly of a wheel, at different heights, different lateral distances and/or inclinations with respect to the centre of the vehicle. The camber angle is therefore commonly adjusted by regulating the position of the arm of interest with respect to a reference structure.

In accordance with the prior art, one end of the arm has a hole in which the stem of an adjusting device is inserted. The reference structure has two brackets on two sides of this end of the arm. Each bracket has a slot, also crossed by the stem of the adjusting device. The adjusting device then connects the arm to the reference structure.

The adjusting device has a head assembly and a tightening assembly, on the two ends that protrude from the brackets. The head assembly is formed as one piece with the stem, while the tightening assembly is tightened on the stem, so as to lock the head assembly and the tightening assembly against the respective brackets.

Both head and tightening assemblies have respective eccentric elements, which engage abutment portions of the respective brackets. By rotating the stem around its axis, the eccentric elements act as cams on the brackets. This causes a sliding of the stem within the slots of the brackets. Together with the stem, the entire suspension arm is moved with respect to the brackets, up to the desired position and to the correct camber angle value.

US6176501 B1, which discloses the preamble of claim 1, AU657128 B2, US2013/181422 A1, US2005/001397 A1 and US2890893 A disclose adjusting devices.

### Problem of the prior art

The adjusting device is usually located in a position of the vehicle that is difficult to access, especially with reference to its innermost end with respect to the vehicle.

If necessary, the operator in charge of the adjustment must loosen the tightening assembly, rotate the stem with the eccentric elements, and clamp the tightening assembly again. Therefore, the tightening assembly must be located towards the outside of the vehicle, on the most accessible side. Conversely, the head assembly is on the inner least accessible side.

Since the head assembly is formed as one piece with the stem, during assembly or special maintenances, the stem must necessarily be inserted into the holes and into the slots of the arm and of the reference structure of the suspension from the rear side. The movements of insertion and removal of the stem in such a small and inaccessible space entails considerable difficulties, and imposes limitations on the possibility of placing other parts of the suspension or of the vehicle in the maneuver area of the stem.

### Summary of the invention

The object of the present invention is to simplify the assembly and disassembly of a suspension adjusting device.

This and other objects are achieved by an adjusting device for adjusting the camber angle for a suspension, by a suspension, and by a method for assembling and adjusting a suspension, according to any one of the appended claims.

The invention provides that the head assembly is not formed as one piece with the stem, but it is removably mounted thereon. In the head assembly, an eccentric element is held in place by a locking assembly.

This allows the operator to insert the stem into the holes and into the appropriate slots starting from the most accessible side, and not from the rear side. The eccentric element and the locking assembly are then fitted onto the stem when it is already in place, for which a much smaller rear operating space is necessary, and the designer can freely arrange other suspension or vehicle components closer to the arm.

The invention further provides that a portion of an elastic member of the locking assembly, for example a clip, snap engages into a locking seat of the stem. This allows the operator to mount the adjusting device in a particularly simple way even from behind, and then to dismount it by disengaging the elastic member from the seat. As long as the locking seat is engaged by the elastic member, the axial sliding and removal of the eccentric element from the stem is prevented.

Further features and advantages of the invention will be recognisable by a person skilled in the art from the following detailed description of exemplary embodiments of the invention.

### BRIEF DESCRIPTION OF THE DRAWINGS

The accompanying figures schematically show, by way of non-limiting example, examples useful for understanding some embodiments of the invention, and in particular:

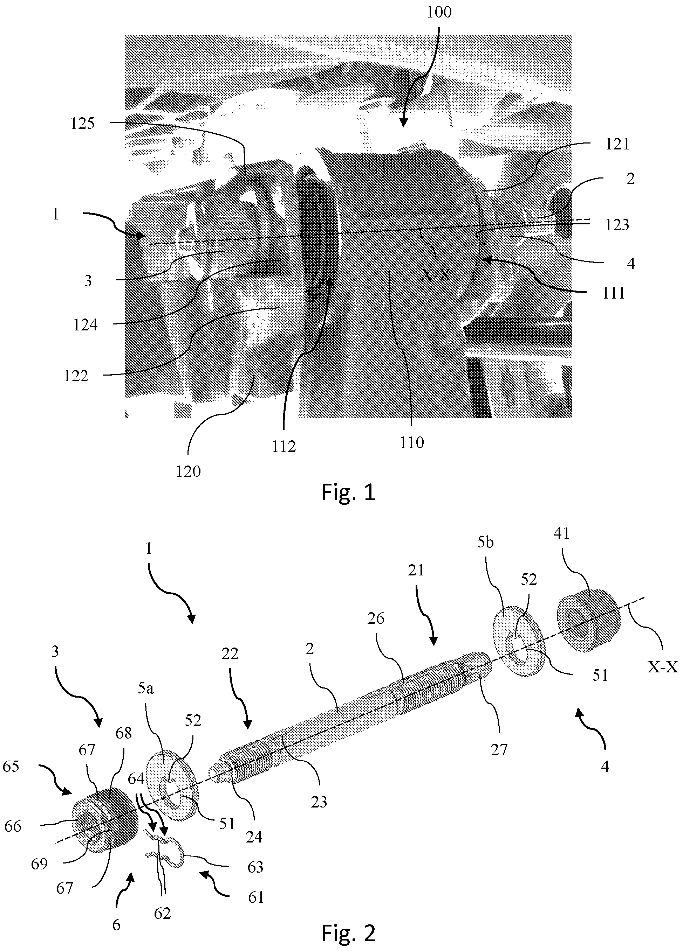

- Figure 1 shows a perspective view of a portion of a suspension in accordance with an embodiment of the invention,
- Figure 2 shows an exploded perspective view of an adjusting device according to an embodiment of the invention, included in the suspension of Figure 1,

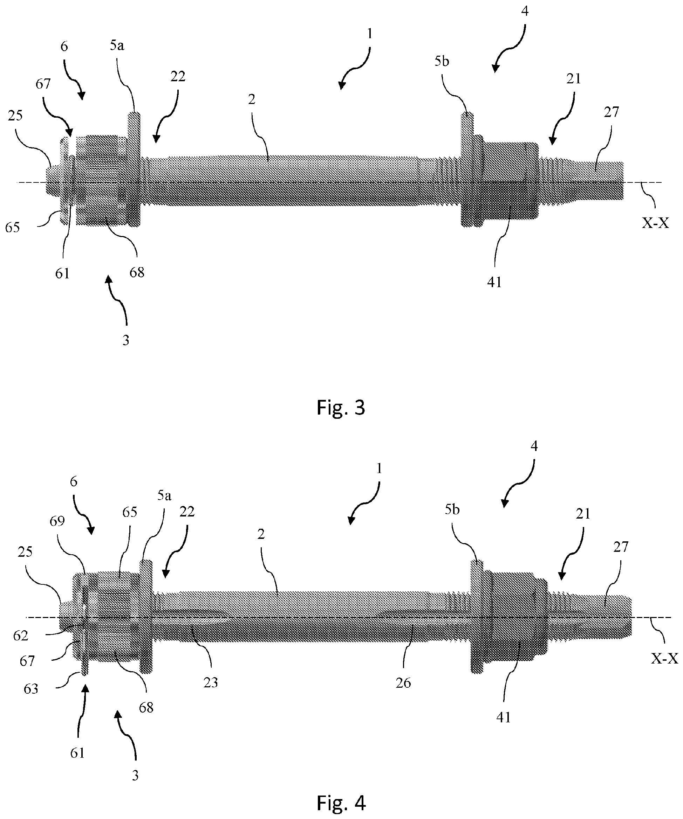

- Figures 3 and 4 show two side views of the adjusting device of Figure 2,

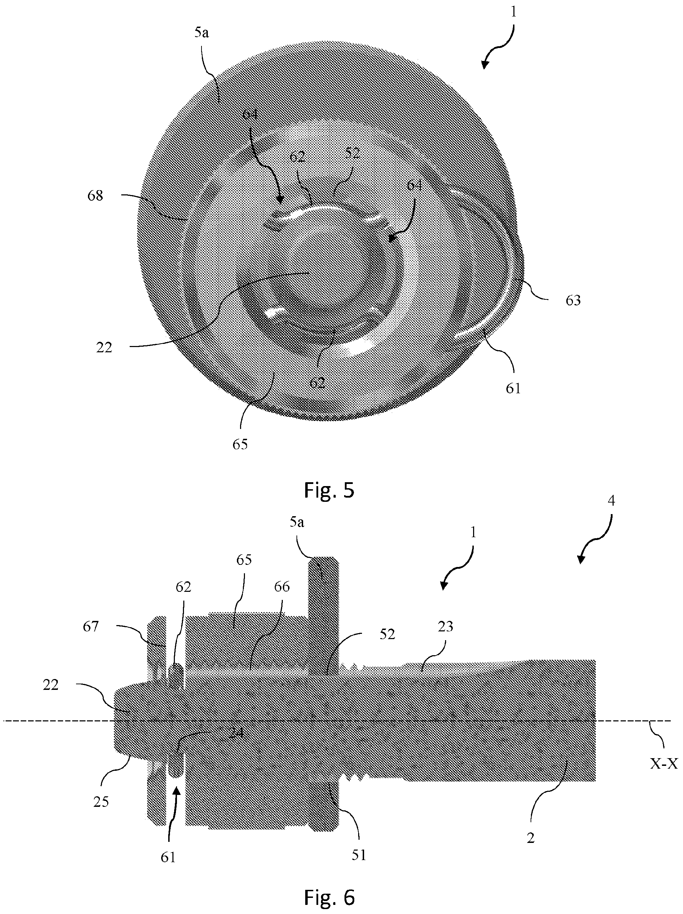

- Figure 5 shows a front view of the adjusting device of Figure 2,
- Figure 6 shows a partial view in side section of the adjusting device in Figure 2, and

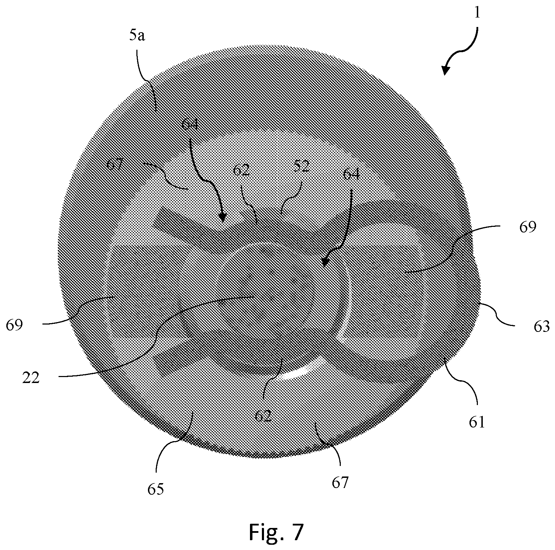

- Figure 7 shows a front sectional view of the adjusting device of Figure 2.

### DETAILED DESCRIPTION

The figures show some parts of an example of suspension, indicated as a whole with the number 100. Other parts of the suspension 100 have not been illustrated as they can be readily reconstructed or configured in various ways known to a person skilled in the art.

The suspension 100 comprises a suspension arm 110 and a suspension support 120. The suspension 100 further comprises an adjusting device 1 according to an embodiment of the present invention. The suspension arm 110 and the suspension support 120 are connected to each other by the adjusting device 1.

In one embodiment, the suspension arm 110 is configured to be connected, directly or indirectly, to a hub assembly of a wheel of a vehicle (not illustrated). Further, the suspension support 120 is configured to be connected, directly or indirectly, to a vehicle chassis. Preferably, a damping device (not illustrated) of the suspension 100 is connected directly or indirectly to the arm 110.

The arm 110 has a first side 111, which in use is preferably a front side, i.e. a side turned towards the periphery of the vehicle. Furthermore, the arm 110 has a second side 112, which in use is preferably a rear side. The rear side is generally opposite with respect to the position of other moving mechanical members of the vehicle, such as its half-axles. It is common for other cumbersome parts of the vehicle to be located near the rear side of the arm 110, and therefore the rear side is more difficult for an operator to reach.

The arm 110 also has an axial hole (not illustrated). The axial hole extends mainly along an axial direction X-X, between the first side 111 and the second side 112.

The suspension support 120 has a first and a second bracket 121, 122, spaced from each other in the axial direction X-X. The first and the second bracket 121, 122 are fixed to a central portion (not illustrated) of the support 120.

The first bracket 121 has a first wall 123 in which a first slot (not illustrated) is formed, and the second bracket 122 has a second wall 124 in which a second slot (not illustrated) is formed. The first and the second wall 123, 124 are arranged transverse to the axial direction X-X.

The arm 110 is at least partially positioned between the first bracket 121 and the second bracket 122. In more detail, the first bracket 121 (precisely, the first wall 123) faces the first side 111 of the suspension arm 110, and the second bracket 122 (precisely, the second wall 124) faces the second side 112 of the suspension arm 110. The axial hole is aligned in the axial direction X-X to at least a portion of the first and of the second slot.

The adjusting device 1 for the suspension 100 comprises a stem 2. The stem 2 is inserted into the axial hole of the suspension arm 110, and extends mainly in the axial direction X-X.

The stem 2 has a first end portion 21 and an opposite second end portion 22. The first end portion 21 extends through the first slot of the first bracket 121, and the second end portion 22 extends through the second slot of the second bracket 122.

The adjusting device 1 comprises a head assembly 3 and a tightening assembly 4.

In use, the head assembly 3 is positioned at the second end portion 22 of the stem 2, while the tightening assembly 4 is positioned at the first end portion 21 of the stem 2. Therefore, in use, the first and the second bracket 121, 122 of the suspension support 120, as well as the suspension arm 110, are at least partially located between the head assembly 3 and the tightening assembly 4.

When tightening the tightening assembly 4, according to the methods described below, the head assembly 3 abuts against the second wall 124 of the second bracket 122, while the tightening assembly 4 abuts against the first wall 123.

The head assembly 3 comprises a first eccentric element 5a, removably mounted on the stem 2, precisely on the second end portion 22. When assembled, the first eccentric element 5a protrudes radially from the stem 2.

In the illustrated embodiment, the first eccentric element 5a has a hole 51, and the second end portion 22 of the stem 2 is insertable into the hole.

The stem 2 and the first eccentric element 5a are shaped to prevent, when assembled, their reciprocal rotation about the axis of the stem 2. Therefore, when the stem 2 is rotated with respect to the arm 110 or to the support 120 of the suspension 100, the first eccentric element 5a rotates jointly with the stem 2.

Preferably, for this purpose, the second end portion 22 of the stem 2 has a guide 23 extending maily in the axial direction X-X. In a complementary manner, the first eccentric element 5a has a slider 52, for example shaped as a protrusion oriented towards the centre of the hole 51. The slider 52 is shaped to engage the guide 23 and to slide along the guide 23 along the axial direction X-X.

The first eccentric element 5a has an outer profile shaped to act as a cam, e.g. a rounded profile not coaxial with respect to the stem 2. In more detail, the second bracket 122 has a first abutment portion 125, fixed to the second wall 124. The first eccentric element 5a is configured to act as a cam engaging the first abutment portion 125, during the rotation of the stem 2 about its axis.

Thus, the angular position of the stem assembly 2 and the first eccentric element 5a, with respect to the suspension support 120, determines the position of the stem 2 with respect to the first and to the second slot. In fact, the contact between the first eccentric element 5a and the first abutment portion 125 prevents the stem 2 from sliding in the slots, in a first direction.

It is also worth noting that in use the stem 2 is pressed by the arm 110 in the first direction, and therefore does not move along the slots, in an opposite second direction. The pressure on the stem 2 in the first direction can, for example, be originated by the weight of the chassis or by elastic elements of the suspension that are known to those skilled in the art.

The head assembly 3 comprises a locking assembly 6, adapted to be removably fitted on the stem 2, precisely on the second end portion 22. In assembled condition, the locking assembly 6 is configured to prevent the removal in the axial direction X-X of the first eccentric element 5a from the second end portion 22 of the stem 2. The first eccentric element 5a is thus located between the second wall 124 and the locking assembly 6.

The second end portion 22 of the stem 2 has a locking seat 24. Complementarily, the locking assembly 6 comprises an elastic member 61 having at least one locking portion 62 snap engageable in the locking seat 24.

In the illustrated embodiment, the locking seat 24 comprises a groove formed circumferentially in the second end portion 22 of the stem 2. Preferably, such a groove extends along an entire circumference around the stem 2.

Furthermore, the elastic member 61 comprises a clip having two arms and a connecting portion 63 between the two arms. The locking portion 62 is defined by a portion of an arm of the clip. Preferably, the clip has two locking portions 62, one per arm.

In the illustrated embodiment, the two arms are shaped to elastically retain the stem 2 between them, at the locking seat 24. In more detail, between the two arms there are two narrowings 64, on opposite sides of the stem 2.

Preferably, the locking assembly 6 comprises a locking support 65, shaped like a nut, for example. The locking support 65 has an axial hole 66 into which the second end portion 22 of the stem 2 is insertable.

In the preferred embodiment, the second end portion 22 is at least partially threaded. Further, the axial hole 66 of the locking support 65 is internally threaded to screw the locking support 65 onto the second end portion 22.

In the illustrated embodiment, the locking support 65 has an outer knurl 68 to facilitate an operator grasping the locking support 65 and screwing it onto the stem 2. In other embodiments, the locking support 65 may also be externally smooth, or it may have a polygonal outer shape, preferably complementary to a known tool, for being screwed onto the stem 2.

The elastic member 61 is coupled to the locking support 65. Preferably, the locking support 65 for this purpose has at least one slot 67, which extends circumferentially around the locking support 65 and is open on the axial hole 66.

The at least one slot 67 does not cover an entire circumference of the locking support 65. In fact, the locking support 65 has at least one bridge 69, circumferentially delimiting the at least one slot 67. The bridge 69 thus connects parts of the locking support 65 which are located at axially opposed sides of the slot 67.

In the illustrated embodiment, two slots 67 and two bridges 69 are provided, and the circumferential ends of each slot 67 are placed at distinct bridges 69. Each slot 67 can be obtained by milling the locking support 65 along a circumference thereof, excluding each bridge 69.

The clip engages the slot(s) 67 in such a way that it is retained with respect to the axial direction X-X.

In the preferred embodiment, the elastic member 61 is graspable and manually operable to disengage from the locking seat 24. For example, the clip may protrude at least in part from the locking element 24, and in particular from the slot(s) 67. In the illustrated example, the connecting portion 63 of the clip protrudes outside the locking member 24, precisely outside a bridge 69, so that it can be grasped and pulled. The arms of the clip simultaneously engage the slots 67 of the locking element 24, on opposite sides of the bridge 69, and the locking seat 24 of the stem 2. As the connecting portion 63 is pulled, the arms elastically spread apart, and the clip is removed from the locking seat 24 and from the slots 67.

Preferably, the second end portion 22 of the stem 2 has a tapered portion 25. The tapered portion 25 is shaped to deform and preload the elastic member 61, while the locking assembly 6 is fitted onto the second end portion 22 of the stem 2.

It is worth noting that the locking seat 24 is located between the tapered portion 25 and the first end portion 21 of the stem 2. Thus, the locking assembly 6, while it is fitted on the second end portion 22, first encounters the tapered portion 25, and then the locking seat 24, in which the previously preloaded elastic member 61 snap engages.

In this operation, the clip is initially already retained by the slot 67 of the locking support 65. The tapered portion 25 wedges between the two arms of the clip, spreading them apart and thus elastically preloading them. When the locking seat 24 is reached, i.e. when the groove of the stem 2 is aligned with the slot 67 of the locking support 65, the arms of the clip snap elastically towards each other engaging the locking seat 24.

Subsequently, the engagement of the locking portion 62 of the elastic member 61 in the locking seat 24 prevents the axial sliding of the locking assembly 6 with respect to the stem 2.

It is worth noting that the threaded coupling between the stem 2 and the locking support 65 is optional, but particularly advantageous, as it reduces the force the operator requires to fit the locking assembly 6 on the stem 2, while the elastic member 61 is being preloaded. At the same time, thanks to these threads, the axial loads on the locking assembly 6 are mainly balanced by the threads, and not by the elastic member 61, which can therefore be dimensioned with a reduced mechanical resistance.

On the opposite side of the stem 2, the tightening assembly 4 is configured to be tightened with a predefined tightening torque value on the first end portion 21 of the stem 2, against the first wall 123 of the first bracket 121 of the suspension support 120.

The illustrated example of tightening assembly 4 comprises a threaded nut 41. The first end portion 21 of the stem 2 is at least partially threaded, and the nut 41 is screwable on the first end portion 21 of the stem 2. The nut 41 preferably has an outer profile complementary to a tightening tool, for example a polygonal profile. While the nut 41 is being tightened, the head assembly 3 is also tightened against the second wall 124 of the second bracket 122 of the suspension bracket 120.

Preferably, for an even distribution of the mechanical stresses, the tightening assembly 4 comprises a second eccentric element 5b that is entirely similar to the first eccentric element 5a. The second eccentric element 5b is located between the first wall 123 and the threaded nut 41.

In addition, the first bracket 121 has a second abutment portion (not illustrated), completely similar to the first abutment portion 125 of the second bracket 122. In fact, the second eccentric element 5b is configured to act as a cam, with the rotation of the stem 2, on the second abutment portion.

Still similarly to the second end portion 22 and to the first eccentric element 5a, the first end portion 21 has a guide 26, similar to the guide 23, and the second eccentric element 5b has a hole 51, a slider 52 slidable along the guide 26, and an outer profile shaped to act as a cam.

As described so far herein, the adjustment of the reciprocal position of the suspension arm 110 and of the suspension support 120 takes place by selecting the desired angular position for the stem 2 and the eccentric elements 5a, 5b, and consequently by setting the position of the first and second end portion 21, 22 of the stem 2 with respect to the first and second slot. To facilitate the rotation of the stem 2, preferably the first end portion 21 of the stem 2 has a gripping portion 27, shaped to be complementary to a gripping tool, such as a mechanical spanner. For example, the gripping portion may have a polygonal section.

A method for assembling and adjusting a suspension according to one aspect of the invention is now described.

The suspension arm 110, the suspension support 120 and the adjusting device 1 are provided in disassembled condition. Then, the stem 2 of the adjusting device 1 is inserted through the first slot, the axial hole of the suspension arm 110, and the second slot. The insertion preferably takes place precisely in this order, i.e. from the front side towards the rear side of the arm 110.

The stem 2 is inserted oriented such that the first end portion 21 is on the side of the first bracket 121, and the second end portion 22 is on the side of the second bracket 122.

The first eccentric element 5a is mounted on the second end portion 22 of the stem 2.

In the illustrated embodiment, the locking assembly 6 is assembled by mounting the elastic member 61 to the locking support 65. In this step, the arms of the clip are inserted into at least one slot 67 of the locking support 65, on opposite sides of a bridge 69. The bridge 69 prevents the clip from being so far fitted as the connecting portion 63 engages the locking seat 24. Thus, the connecting portion 63 remains graspable from the outside.

The locking assembly 6 is fitted on the second end portion 22 of the stem 2. In this step, the clip is elastically preloaded by axially passing along the tapered portion 25 of the stem 2.

The locking assembly 6 is fitted until the locking portion 62 of the elastic member 61 snap engages in the locking seat 24 of the stem 2.

In this condition, that is before the tightening assembly 4 is tightened on the first end portion 21 of the stem 2, the stem 2 and the first eccentric element 5a (and preferably also the second eccentric element 5b) are rotated, bringing the first eccentric element 5a into contact with the first abutment portion 125 of the second bracket 22, and preferably the second eccentric element 5b into contact with the second abutment portion of the first bracket 21.

In this way, a sliding of the stem 2 with respect to the first and second slot is obtained, until a predetermined position of the stem 2 is reached with respect to the first and second slot.

Without leaving the obtained angular position, the tightening assembly 4 is tightened on the first end portion 21 of the stem 2, against the first wall 123 of the first bracket 121 of the suspension 100, bringing the head assembly 3 into abutment against the second wall 124 of the second bracket 122 of the suspension 100.

In a method for disassembling the suspension 100, after having loosened the tension present in the device by acting on the tightening assembly 4, a preferred step is represented by grasping the elastic member 61 and disengaging it from the locking seat 24. A next step is to remove the head assembly 3 from the second end portion 22 of the stem 2. Finally, as a step that may precede or follow those already described, the tightening assembly 4 is separated from the first end portion 21 of the stem 2.

Obviously, a person skilled in the art will be able to make numerous equivalent modifications to the variants set forth above, without thereby abandoning the scope of protection defined by the appended claims.

## Claims

1. Adjusting device (1) for adjusting the camber angle for a suspension (100) of a motor vehicle, comprising:
- a stem (2) extending mainly in an axial direction (X-X), having a first end portion (21) and a second end portion (22),
- a tightening assembly (4), configured to be tightened on the first end portion (21) of the stem (2) and configured to abut against a first wall (123) of a suspension (100), and
- a head assembly (3), positioned at the second end portion (22) of the stem (2) and configured to abut against a second wall (124) of the suspension (100) upon tightening the tightening assembly (4),
wherein the head assembly (3) comprises a first eccentric element (5a), removably mounted on the stem (2) and radially protruding from the stem (2), configured to act as a cam, upon rotation of the stem (2), on a first abutment portion (125) of the suspension (100),
**characterised in that:**
- the head assembly (3) comprises a locking assembly (6), adapted to be removably fitted on the stem (2) and configured to prevent removal of the first eccentric element (5a) from the second end portion (22) of the stem (2),
- the second end portion (22) of the stem (2) has a locking seat (24), and
- the locking assembly (6) comprises an elastic member (61) having at least one locking portion (62) adapted to be snap engaged in the locking seat (24).

2. Device (1) according to claim 1, wherein:
- the locking assembly (6) comprises a locking support (65) having an axial hole (66), the second end portion (22) of the stem (2) being insertable into the axial hole (66) of the locking support (65), and
- the elastic member (61) is coupled to the locking support (65).

3. Device (1) according to claim 2, wherein:
- the second end portion (22) of the stem (2) is at least partially threaded, and
- the axial hole (66) of the locking support (65) is internally threaded to screw the locking support (65) onto the second end portion (22) of the stem (2).

4. Device (1) according to claim 2 or 3, wherein the elastic member (61) is a clip, each locking portion (62) being a portion of an arm of the clip, the clip preferably having two locking portions (62).

5. Device (1) according to claim 4, wherein the locking support (65) has at least one slot (67), the clip being retained with respect to the axial direction (X-X) in the slot (67).

6. Device (1) according to claim 5, wherein:
- the locking support (65) has at least one bridge (69), circumferentially delimiting the at least one slot (67),
- two arms of the clip simultaneously engage one or more slots (67) of the locking element (24), on opposite sides of the at least one bridge (69).

7. Device (1) according to any one of claims 1 to 6, wherein the elastic member (61) is adapted to be grasped and manually operated to disengage from the locking seat (24).

8. Device (1) according to any one of claims 1 to 7, wherein the locking seat (24) comprises a groove formed circumferentially in the second end portion (22) of the stem (2).

9. Device (1) according to any one of claims 1 to 8, wherein the second end portion (22) of the stem (2) has a tapered portion (25), shaped to deform and preload the elastic member (61) while the locking assembly (6) is fitted on the second end portion (22) of the stem (2), before the elastic member (61) is snap engaged in the locking seat (24).

10. Device (1) according to any one of claims 1 to 9, wherein:
- the first end portion (21) of the stem (2) is at least partially threaded,
- the tightening assembly (4) comprises a threaded nut (41) screwable on the first end portion (21) of the stem (2),
- preferably, the tightening assembly (4) comprises a second eccentric element (5b) radially protruding from the stem (2), configured to act as a cam, upon rotation of the stem (2), on a second abutment portion of the suspension (100).

11. Suspension (100) of a motor vehicle, comprising:
- a suspension arm (100), having a first side (111), a second side (112) and an axial hole that extends between the first and second side (111, 112),
- a suspension support (100), having a first bracket (121) facing the first side (111) of the suspension arm (100) and a second bracket (122) facing the second side (112) of the suspension arm (100),
wherein the first bracket (121) has a first wall (123) with a first slot, and the second bracket (122) has a second wall (124) with a second slot, and a first abutment portion (125),
- a device (1) according to any one of claims 1 to 10,
wherein:
- the stem (2) is inserted into the axial hole of the suspension arm (100),
- the first end portion (21) of the stem (2) extends through the first slot, and the second end portion (22) of the stem (2) extends through the second slot,
- the head assembly (3) abuts the second wall (124) of the second bracket (122), and the tightening assembly (4) is tightened against the first wall (123) of the first bracket (121), and
- the first eccentric element (5a) engages the first abutment portion (125) of the second bracket (122), so as to determine a position of the first and second end portions (21, 22) of the stem (2) with respect to the first and second slots.

12. Method for adjusting the camber angle for a suspension (100) of a motor vehicle according to claim 11, comprising:
- providing said suspension arm (100), said suspension support (100), and said adjusting device (1), in disassembled condition,
- inserting the stem (2) of the adjusting device (1) through the first slot, the axial hole of the suspension arm (100), and the second slot, with the first end portion (21) on the side of the first bracket (121) and the second end portion (22) on the side of the second bracket (122),
- mounting the first eccentric element (5a) on the second end portion (22) of the stem (2),
- fitting the locking assembly (6) on the second end portion (22) of the stem (2), until snap engaging the locking portion (62) of the elastic member (61) in the locking seat (24) of the stem (2),
- rotating the stem (2) and the first eccentric element (5a), bringing the first eccentric element (5a) into contact with the first abutment portion (125) of the second bracket (122), so as to cause the stem (2) to slide with respect to the first and to the second slot, until reaching a predetermined position of the stem (2) with respect to the first and the second slot,
- tightening the tightening assembly (4) on the first end portion (21) of the stem (2) with a predefined tightening torque value, against the first wall (123) of the first bracket (121) of the suspension (100), bringing the head assembly (3) in abutment against the second wall (124) of the second bracket (122) of the suspension (100).

## Patentansprüche

1. Einstellvorrichtung (1) zum Einstellen des Sturzwinkels für eine Radaufhängung (100) eines Kraftfahrzeugs, umfassend:
- einen Schaft (2), der sich hauptsächlich in einer axialen Richtung (X-X) erstreckt, der einen ersten Endabschnitt (21) und einen zweiten Endabschnitt (22) aufweist,
- eine Anziehanordnung (4), die konfiguriert ist, um an dem ersten Endabschnitt (21) des Schafts (2) angezogen zu werden, und konfiguriert ist, um an einer ersten Wand (123) einer Radaufhängung (100) anzuliegen, und
- eine Kopfanordnung (3), die an dem zweiten Endabschnitt (22) des Schafts (2) positioniert ist und konfiguriert ist, um bei dem Anziehen der Anziehanordnung (4) an einer zweiten Wand (124) der Radaufhängung (100) anzuliegen,
wobei die Kopfanordnung (3) ein erstes Exzenterelement (5a) umfasst, das auf dem Schaft (2) abnehmbar montiert ist und radial von dem Schaft (2) vorsteht, das konfiguriert ist, um bei einer Drehung des Schafts (2) als eine Nocke auf einen ersten Anlageabschnitt (125) der Radaufhängung (100) einzuwirken,
**dadurch gekennzeichnet, dass:**
- die Kopfanordnung (3) eine Verriegelungsanordnung (6) umfasst, die angepasst ist, um auf den Schaft (2) abnehmbar aufgesetzt zu werden, und konfiguriert ist, um ein Abnehmen des ersten Exzenterelements (5a) von dem zweiten Endabschnitt (22) des Schafts (2) zu verhindern,
- der zweite Endabschnitt (22) des Schafts (2) einen Verriegelungssitz (24) aufweist, und
- die Verriegelungsanordnung (6) ein elastisches Element (61) umfasst, das mindestens einen Verriegelungsabschnitt (62) aufweist, der angepasst ist, um in dem Verriegelungssitz (24) in Schnappeingriff zu stehen.

2. Vorrichtung (1) nach Anspruch 1, wobei:
- die Verriegelungsanordnung (6) eine Verriegelungshalterung (65) umfasst, die ein axiales Loch (66) aufweist, wobei der zweite Endabschnitt (22) des Schafts (2) in das axiale Loch (66) der Verriegelungshalterung (65) einführbar ist, und
- das elastische Element (61) mit der Verriegelungshalterung (65) gekoppelt ist.

3. Vorrichtung (1) nach Anspruch 2, wobei:
- der zweite Endabschnitt (22) des Schafts (2) mindestens teilweise mit einem Gewinde versehen ist, und
- das axiale Loch (66) der Verriegelungshalterung (65) mit einem Innengewinde versehen ist, um die Verriegelungshalterung (65) auf den zweiten Endabschnitt (22) des Schafts (2) zu schrauben.

4. Vorrichtung (1) nach Anspruch 2 oder 3, wobei das elastische Element (61) ein Clip ist, wobei jeder Verriegelungsabschnitt (62) ein Abschnitt eines Arms des Clips ist, wobei der Clip vorzugsweise zwei Verriegelungsabschnitte (62) aufweist.

5. Vorrichtung (1) nach Anspruch 4, wobei die Verriegelungshalterung (65) mindestens einen Schlitz (67) aufweist, wobei der Clip in Bezug auf die axiale Richtung (X-X) in dem Schlitz (67) gehalten wird.

6. Vorrichtung (1) nach Anspruch 5, wobei:
- die Verriegelungshalterung (65) mindestens einen Steg (69) aufweist, der den mindestens einen Schlitz (67) in Umfangsrichtung begrenzt,
- zwei Arme des Clips einen oder mehrere Schlitze (67) des Verriegelungselements (24) auf gegenüberliegenden Seiten des mindestens einen Stegs (69) gleichzeitig in Eingriff nehmen.

7. Vorrichtung (1) nach einem der Ansprüche 1 bis 6, wobei das elastische Element (61) angepasst ist, um ergriffen und manuell betätigt zu werden, um es aus dem Verriegelungssitz (24) zu lösen.

8. Vorrichtung (1) nach einem der Ansprüche 1 bis 7, wobei der Verriegelungssitz (24) eine Nut umfasst, die in dem zweiten Endabschnitt (22) des Schafts (2) in Umfangsrichtung ausgebildet ist.

9. Vorrichtung (1) nach einem der Ansprüche 1 bis 8, wobei der zweite Endabschnitt (22) des Schafts (2) einen konischen Abschnitt (25) aufweist, der geformt ist, um das elastische Element (61) zu verformen und vorzuspannen, während die Verriegelungsanordnung (6) auf den zweiten Endabschnitt (22) des Schafts (2) aufgesetzt wird, bevor das elastische Element (61) in dem Verriegelungssitz (24) in Schnappeingriff genommen wird

10. Vorrichtung (1) nach einem der Ansprüche 1 bis 9, wobei:
- der erste Endabschnitt (21) des Schafts (2) mindestens teilweise mit einem Gewinde versehen ist,
- die Anziehanordnung (4) eine Gewindemutter (41) umfasst, die auf den ersten Endabschnitt (21) des Schafts (2) aufschraubbar ist,
- vorzugsweise die Anziehanordnung (4) ein zweites exzentrisches Element (5b) umfasst, das radial von dem Schaft (2) vorsteht, das konfiguriert ist, um bei der Drehung des Schafts (2) als eine Nocke auf einen zweiten Anlageabschnitt der Radaufhängung (100) einzuwirken.

11. Radaufhängung (100) eines Kraftfahrzeugs, umfassend:
- einen Radaufhängungsarm (100), der eine erste Seite (111), eine zweite Seite (112) und ein axiales Loch aufweist, das sich zwischen der ersten und der zweiten Seite (111, 112) erstreckt,
- eine Radaufhängungshalterung (100), die eine erste Halterung (121), die der ersten Seite (111) des Radaufhängungsarms (100) zugewandt ist, und eine zweite Halterung (122) aufweist, die der zweiten Seite (112) des Radaufhängungsarms (100) zugewandt ist,
wobei die erste Halterung (121) eine erste Wand (123) mit einem ersten Schlitz aufweist und die zweite Halterung (122) eine zweite Wand (124) mit einem zweiten Schlitz und einen ersten Anlageabschnitt (125) aufweist,
- eine Vorrichtung (1) nach einem der Ansprüche 1 bis 10,
wobei:
- der Schaft (2) in das axiale Loch des Radaufhängungsarms (100) eingeführt wird,
- sich der erste Endabschnitt (21) des Schafts (2) durch den ersten Schlitz erstreckt und sich der zweite Endabschnitt (22) des Schafts (2) durch den zweiten Schlitz erstreckt,
- die Kopfanordnung (3) an der zweiten Wand (124) der zweiten Halterung (122) anliegt und die Anziehanordnung (4) gegen die erste Wand (123) der ersten Halterung (121) angezogen ist, und
- das erste Exzenterelement (5a) den ersten Anlageabschnitt (125) der zweiten Halterung (122) in Eingriff nimmt, um eine Position des ersten und des zweiten Endabschnitts (21, 22) des Schafts (2) in Bezug auf den ersten und den zweiten Schlitz zu bestimmen.

12. Verfahren zum Einstellen des Sturzwinkels für eine Radaufhängung (100) eines Kraftfahrzeugs nach Anspruch 11, umfassend:
- Bereitstellen des Radaufhängungsarms (100), der Radaufhängungshalterung (100) und der Einstellvorrichtung (1) in zerlegtem Zustand,
- Einführen des Schafts (2) der Einstellvorrichtung (1) durch den ersten Schlitz, das axiale Loch des Radaufhängungsarms (100) und den zweiten Schlitz, wobei der erste Endabschnitt (21) auf der Seite der ersten Halterung (121) und der zweite Endabschnitt (22) auf der Seite der zweiten Halterung (122) liegt,
- Montieren des ersten Exzenterelements (5a) an dem zweiten Endabschnitt (22) des Schafts (2),
- Aufsetzen der Verriegelungsanordnung (6) auf den zweiten Endabschnitt (22) des Schafts (2), bis der Verriegelungsabschnitt (62) des elastischen Elements (61) in dem Verriegelungssitz (24) des Schafts (2) in Schnappeingriff steht,
- Drehen des Schafts (2) und des ersten Exzenterelements (5a), wobei das erste Exzenterelement (5a) in Kontakt mit dem ersten Anlageabschnitt (125) der zweiten Halterung (122) gebracht wird, um so zu bewirken, dass der Schaft (2) in Bezug auf den ersten und den zweiten Schlitz gleitet, bis eine vorbestimmte Position des Schafts (2) in Bezug auf den ersten und den zweiten Schlitz erreicht ist,
- Anziehen der Anziehanordnung (4) an dem ersten Endabschnitt (21) des Schafts (2) mit einem vordefinierten Anziehdrehmoment gegen die erste Wand (123) der ersten Halterung (121) der Radaufhängung (100), wobei die Kopfanordnung (3) in Anlage an der zweiten Wand (124) der zweiten Halterung (122) der Radaufhängung (100) gebracht wird.

## Revendications

1. Dispositif de réglage (1) permettant de régler l'angle de carrossage pour une suspension (100) d'un véhicule à moteur, comprenant :
- une tige (2) s'étendant principalement dans une direction axiale (X-X), ayant une première partie d'extrémité (21) et une seconde partie d'extrémité (22),
- un ensemble de serrage (4), conçu pour être serré sur la première partie d'extrémité (21) de la tige (2) et conçu pour venir en butée contre une première paroi (123) d'une suspension (100), et
- un ensemble tête (3), positionné au niveau de la seconde partie d'extrémité (22) de la tige (2) et conçu pour venir en butée contre une seconde paroi (124) de la suspension (100) lors du serrage de l'ensemble de serrage (4),
dans lequel l'ensemble tête (3) comprend un premier élément excentrique (5a), monté de manière amovible sur la tige (2) et faisant saillie radialement à partir de la tige (2), conçu pour agir en guise de came, lors de la rotation de la tige (2), sur une première partie de butée (125) de la suspension (100),
**caractérisé en ce que :**
- l'ensemble tête (3) comprend un ensemble de verrouillage (6), adapté pour être ajusté de manière amovible sur la tige (2) et conçu pour empêcher le retrait du premier élément excentrique (5a) de la seconde partie d'extrémité (22) de la tige (2),
- la seconde partie d'extrémité (22) de la tige (2) a un siège de verrouillage (24), et
- l'ensemble de verrouillage (6) comprend un élément élastique (61) ayant au moins une partie de verrouillage (62) adaptée pour être en prise par encliquetage dans le siège de verrouillage (24).

2. Dispositif (1) selon la revendication 1, dans lequel :
- l'ensemble de verrouillage (6) comprend un support de verrouillage (65) ayant un trou axial (66), la seconde partie d'extrémité (22) de la tige (2) pouvant être insérée dans le trou axial (66) du support de verrouillage (65), et
- l'élément élastique (61) est accouplé au support de verrouillage (65).

3. Dispositif (1) selon la revendication 2, dans lequel :
- la seconde partie d'extrémité (22) de la tige (2) est au moins partiellement filetée, et
- le trou axial (66) du support de verrouillage (65) est fileté intérieurement pour visser le support de verrouillage (65) sur la seconde partie d'extrémité (22) de la tige (2).

4. Dispositif (1) selon la revendication 2 ou 3, dans lequel l'élément élastique (61) est une pince, chaque partie de verrouillage (62) étant une partie d'un bras de la pince, la pince ayant de préférence deux parties de verrouillage (62).

5. Dispositif (1) selon la revendication 4, dans lequel le support de verrouillage (65) a au moins une fente (67), la pince étant retenue par rapport à la direction axiale (X-X) dans la fente (67).

6. Dispositif (1) selon la revendication 5, dans lequel :
- le support de verrouillage (65) a au moins un pont (69) délimitant de manière circonférentielle l'au moins une fente (67),
- deux bras de la pince viennent en prise simultanément dans une ou plusieurs fentes (67) de l'élément de verrouillage (24), sur des côtés opposés de l'au moins un pont (69).

7. Dispositif (1) selon l'une quelconque des revendications 1 à 6, dans lequel l'élément élastique (61) est adapté pour être saisi et actionné manuellement afin de venir hors de prise d'avec le siège de verrouillage (24).

8. Dispositif (1) selon l'une quelconque des revendications 1 à 7, dans lequel le siège de verrouillage (24) comprend une rainure formée de manière circonférentielle dans la seconde partie d'extrémité (22) de la tige (2).

9. Dispositif (1) selon l'une quelconque des revendications 1 à 8, dans lequel la seconde partie d'extrémité (22) de la tige (2) a une partie conique (25), façonnée pour déformer et précontraindre l'élément élastique (61) pendant que l'ensemble de verrouillage (6) est ajusté sur la seconde partie d'extrémité (22) de la tige (2), avant que l'élément élastique (61) ne soit en prise par encliquetage dans le siège de verrouillage (24).

10. Dispositif (1) selon l'une quelconque des revendications 1 à 9, dans lequel :
- la première partie d'extrémité (21) de la tige (2) est au moins partiellement filetée,
- l'ensemble de serrage (4) comprend un écrou fileté (41) vissable sur la première partie terminale (21) de la tige (2),
- de préférence, l'ensemble de serrage (4) comprend un second élément excentrique (5b) faisant saillie radialement à partir de la tige (2), conçu pour agir en guise de came, lors de la rotation de la tige (2), sur une seconde partie de butée de la suspension (100).

11. Suspension (100) d'un véhicule à moteur, comprenant :
- un bras de suspension (100) ayant un premier côté (111), un second côté (112) et un trou axial qui s'étend entre le premier et le second côté (111, 112),
- un support de suspension (100), avec un premier étrier (121) faisant face au premier côté (111) du bras de suspension (100) et un second étrier (122) faisant face au second côté (112) du bras de suspension (100),
dans lequel le premier étrier (121) a une première paroi (123) avec une première fente, et le second étrier (122) a une seconde paroi (124) avec une seconde fente, et une première partie de butée (125),
- un dispositif (1) selon l'une quelconque des revendications 1 à 10,
dans lequel :
- la tige (2) est insérée dans le trou axial du bras de suspension (100),
- la première partie d'extrémité (21) de la tige (2) s'étend à travers la première fente, et la seconde partie d'extrémité (22) de la tige (2) s'étend à travers la seconde fente,
- l'ensemble tête (3) vient en butée contre la seconde paroi (124) du second étrier (122), et l'ensemble de serrage (4) est serré contre la première paroi (123) du premier étrier (121), et
- le premier élément excentrique (5a) vient en prise avec la première partie de butée (125) du second étrier (122), de manière à déterminer une position des première et seconde parties d'extrémité (21, 22) de la tige (2) par rapport aux première et seconde fentes.

12. Procédé de réglage de l'angle de carrossage pour une suspension (100) d'un véhicule à moteur selon la revendication 11, comprenant :
- la fourniture dudit bras de suspension (100), dudit support de suspension (100) et dudit dispositif de réglage (1) à l'état démonté,
- l'insertion de la tige (2) du dispositif de réglage (1) à travers la première fente, le trou axial du bras de suspension (100) et la seconde fente, avec la première partie d'extrémité (21) sur le côté du premier étrier (121) et la seconde partie d'extrémité (22) sur le côté du second étrier (122),
- le montage du premier élément excentrique (5a) sur la seconde partie d'extrémité (22) de la tige (2),
- l'ajustement de l'ensemble de verrouillage (6) sur la seconde partie d'extrémité (22) de la tige (2), jusqu'à ce que la partie de verrouillage (62) de l'élément élastique (61) vienne en prise par encliquetage dans le siège de verrouillage (24) de la tige (2),
- la rotation de la tige (2) et du premier élément excentrique (5a), amenant le premier élément excentrique (5a) en contact avec la première partie de butée (125) du second étrier (122), de manière à faire glisser la tige (2) par rapport à la première et à la seconde fente, jusqu'à atteindre une position prédéterminée de la tige (2) par rapport à la première et à la seconde fente,
- le serrage de l'ensemble de serrage (4) sur la première partie d'extrémité (21) de la tige (2) avec une valeur de couple de serrage prédéfinie, contre la première paroi (123) du premier étrier (121) de la suspension (100), amenant l'ensemble tête (3) en butée contre la seconde paroi (124) du second étrier (122) de la suspension (100).
